# EUROPEAN PATENT SPECIFICATION

(11) **EP 3 929 953 B1**
(45) Date of publication and mention of the grant of the patent: **21.12.2022**
(21) Application number: 21305847.2
(22) Date of filing: 21.06.2021
(51) Int. Cl.: H01H 1/50, H01H 19/46, H01H 1/22

(54) **MOVING CONTACT PRESSURE MAINTAINING MECHANISM AND DUAL-POWER TRANSFER SWITCH**
MECHANISMUS ZUM HALTEN EINES BEWEGLICHEN KONTAKTDRUCKS UND TRANSFERSCHALTER MIT DOPPELTER LEISTUNG
MÉCANISME DE MAINTIEN DE LA PRESSION DE CONTACT MOBILE ET COMMUTATEUR DE TRANSFERT À DOUBLE PUISSANCE

(30) Priority: 24.06.2020 CN 202010590261
(43) Date of publication of application: 29.12.2021
(73) Proprietor: Schneider Electric Industries SAS, 92500 Rueil-Malmaison (FR)
(72) Inventor: PAN, Yanming, Shanghai 201203 (CN); LIU, Zhenzhong, Shanghai 201203 (CN)
(74) Representative: Manitz Finsterwald Patent- und Rechtsanwaltspartnerschaft mbB

(56) References cited:
- WO-A1-2018/088590
- JP-A- 2016 136 465
- US-A1- 2003 070 908
- US-A1- 2017 309 423

## Description

### Technical field

The present invention relates to a moving contact pressure maintaining mechanism for a dual-power transfer switch and a dual-power transfer switch including the moving contact pressure maintaining mechanism.

### Background

The moving contact of the dual-power transfer switch has a bidirectional contact to contact with the first stationary contact of the first power supply and the second stationary contact of the second power supply. At present, the moving contact pressure maintaining mechanism generally includes two independent elastic devices for two contacts, which leads to a large occupied space and the problem of unstable contact pressure, especially when the contact surface (silver point) of moving and stationary contacts becomes thinner (i.e., the overtravel becomes smaller) because of ablation, the change of contact pressure tends to be relatively large, which affects the mechanical and electrical properties of the dual-power transfer switch. In addition, the moving contact pressure maintaining mechanism used at present is generally set so that the center of mass of moving contact is away from the center of rotation, which makes the moment of inertia of moving contact larger, so that the dual-power transfer switch moves slowly when it is opened, the arc consumes more silver points, and electrical performance becomes worse.

US 2017/309423 A1 discloses a moving contact pressure maintaining mechanism for a dual-power transfer switch, whereby the moving contact pressure maintaining mechanism comprises:a frame, comprising a first elastic piece accommodating region and a second elastic piece accommodating region symmetrically arranged at two ends of the frame; a first elastic piece, arranged in the first elastic piece accommodating region, wherein one end of the first elastic piece is connected to a first end wall of the frame, and the other end of the first elastic piece is connected to a a contact arm; a second elastic piece, arranged in the second elastic piece accommodating region, wherein one end of the second elastic piece is connected to a second end wall of the frame, and the other end of the second elastic piece is connected to the contact arm, wherein if the dual-power transfer switch is switched from the double-off position to a first power-on position or a second power-on position, and after the moving contact moves along with a moving contact bracket such that the moving contact is contact with a first stationary contact of a first power supply or a second stationary contact of a second power supply, a moving amount of the moving contact relative to the moving contact bracket in the frame caused by a further movement of the moving contact bracket is equal to a sum of a compression amount of the first elastic piece and a compression amount of the second elastic piece.

Therefore, there is a need for a moving contact pressure maintaining mechanism that can overcome at least one of the above problems.

### Summary

The present invention provides a moving contact pressure maintaining mechanism for a dual-power transfer switch, wherein the moving contact pressure maintaining mechanism includes: a frame, including a first elastic piece accommodating region and a second elastic piece accommodating region symmetrically arranged at two ends of the frame; a first elastic piece, arranged in the first elastic piece accommodating region, one end of the first elastic piece is connected to a first end wall of the frame, and the other end of the first elastic piece is connected to a first baffle plate; a second elastic piece, arranged in the second elastic piece accommodating region, one end of the second elastic piece is connected to a second end wall of the frame, and the other end of the second elastic piece is connected to a second baffle plate, and the first baffle plate and the second baffle plate are slidably arranged in the frame; an opening for a moving contact to pass through, so that the moving contact is positioned between the first baffle plate and the second baffle plate; a stopper, mounted on a moving contact bracket and extending into the frame, wherein at a double-off position of the dual-power transfer switch, the moving contact respectively abuts against the first baffle plate and the second baffle plate, and the first baffle plate and the second baffle plate respectively abut against two ends of the stopper, wherein when the dual-power transfer switch is switched from the double-off position to a first power-on position or a second power-on position, and after the moving contact moves with a moving contact bracket into contact with a first stationary contact of a first power supply or a second stationary contact of a second power supply, a moving amount of the moving contact relative to the moving contact bracket in the frame caused by a further movement of the moving contact bracket is equal to a sum of a compression amount of the first elastic piece and a compression amount of the second elastic piece.

Preferably, the stopper includes a first boss and a second boss extending into the frame from an upper portion and a lower portion of the moving contact bracket toward the moving contact.

Preferably, at the double-off position of the dual-power transfer switch, the first baffle plate and the second baffle plate respectively abut against step surfaces of the first boss and the second boss.

Preferably, the moving contact pressure maintaining mechanism is arranged at a middle position between a rotation center of the moving contact and a contact surface of the moving contact.

Preferably, the first elastic piece and the second elastic piece are the same.

Preferably, when the moving contact swings in the frame, the compression amount of the first elastic piece is half of a moving amount of the moving contact, and the compression amount of the second elastic piece is half of the moving amount of the moving contact.

The present invention further provides a dual-power transfer switch, including the above-mentioned moving contact pressure maintaining mechanism.

### Brief description of the drawings

FIG. 1 is a schematic diagram of a dual-power transfer switch in a double-off position according to the present invention, illustrating a moving contact bracket;
FIG. 2 is a schematic diagram of the dual-power transfer switch in the double-off position according to the present invention, with an upper portion of the moving contact bracket removed for clarity;
FIG. 3 illustrates a section view of the moving contact pressure maintaining mechanism when viewed from top to bottom in the double-off position;
FIG. 4 is a schematic diagram of a dual-power transfer switch in a first power-on position according to the present invention;
FIG. 5 illustrates a section view of the moving contact pressure maintaining mechanism when viewed from top to bottom in the first power-on position;
FIG. 6 is a schematic diagram of the dual-power transfer switch in a second power-on position according to the present invention; and
FIG. 7 illustrates a section view of the moving contact pressure maintaining mechanism when viewed from top to bottom in the second power-on position.

### Detailed description

Embodiments according to the present invention will be described below with reference to the accompanying drawings, directional terms used in the description are only used to describe the directions illustrated in the drawings, and are not used to limit various embodiments according to the present invention. Here, it should be noted that in the drawings, the same reference numerals are given to components having substantially the same or similar structures and functions, and repeated descriptions thereof will be omitted. Unless otherwise specified, the terms "upper", "lower", "top", "bottom", "inner side" and "outer side" are all described with respect to the drawings of the present invention. The term "including A, B, C, etc., in sequence" only indicates the arrangement order of included components A, B, C, etc., and does not exclude the possibility of including other components between A and B and/or between B and C.

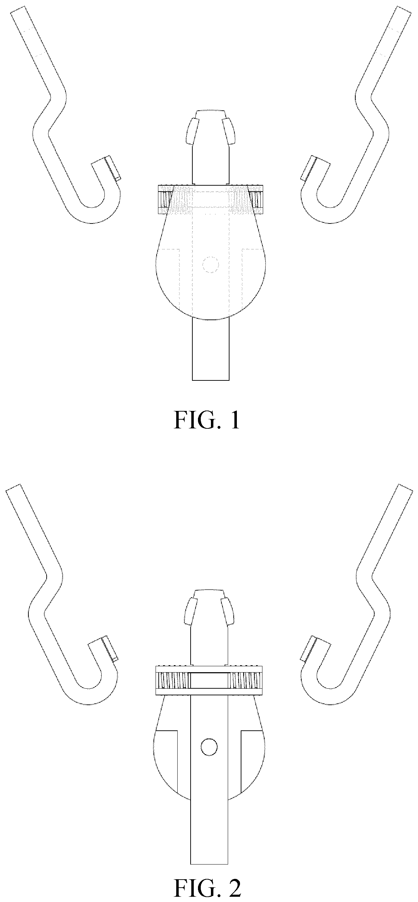

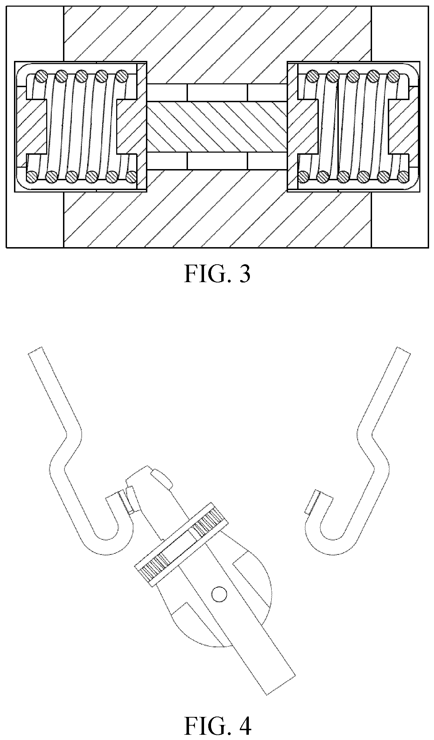

FIGS. 1 and 2 both illustrate a schematic diagram of the dual-power transfer switch in a double-off position according to the present invention, and FIG. 3 illustrates a schematic diagram of the moving contact pressure maintaining mechanism in the double-off position. The dual-power transfer switch includes a moving contact bracket, , and a moving contact 2 is mounted on the moving contact bracket and can swing around a rotation center C, so as to contact with a first stationary contact of a first power supply or a second stationary contact of a second power supply. As illustrated in FIG. 3, the moving contact pressure maintaining mechanism includes a frame 3 which is preferably hollow and includes a first elastic piece accommodating region and a second elastic piece accommodating region located at the two ends. One end of the first elastic piece 4 (such as a spring) is connected to a first end wallet of the frame, and the other end is connected to a first baffle plate 32 which is slidably arranged in the frame in the left-right direction in the figure. One end of the second elastic piece 5 is connected to a second end wall of the frame, and the other end is connected to a second baffle plate 34, similarly, the second baffle plate 34 is slidably arranged in the frame in the left-right direction in the figure. Therefore, the first elastic piece 4 and the second elastic piece 5 are essentially connected in series and can be regarded as a whole, which is equivalent to arranging a long elastic piece in a small space, so that the length is doubled and the rigidity is halved.

It can be seen from the figure that the moving contact pressure maintaining mechanism further includes an opening (not illustrated in the figure) for the moving contact to pass through, so that the moving contact is located between the first baffle plate and the second baffle plate. A stopper in the form of a boss is arranged on the moving contact bracket and extends into the frame to limit the first elastic piece accommodating region and the second elastic piece accommodating region. Specifically, the stopper includes a first boss which extends downward into the frame from the upper portion of the moving contact bracket toward the moving contact and a second boss which extends upward into the frame from the lower portion of the moving contact bracket toward the moving contact. As illustrated in FIG. 3, in the double-off position, the widths of the first boss and of the second boss are equal to the width of the moving contact, and the first baffle plate 32 and the second baffle plate 34 are in contact with the moving contact as well as step surfaces of the first boss and the second boss. It should be understood that other forms of stoppers are also possible, as long as the first elastic piece accommodating region and the second elastic piece accommodating region can be limited.

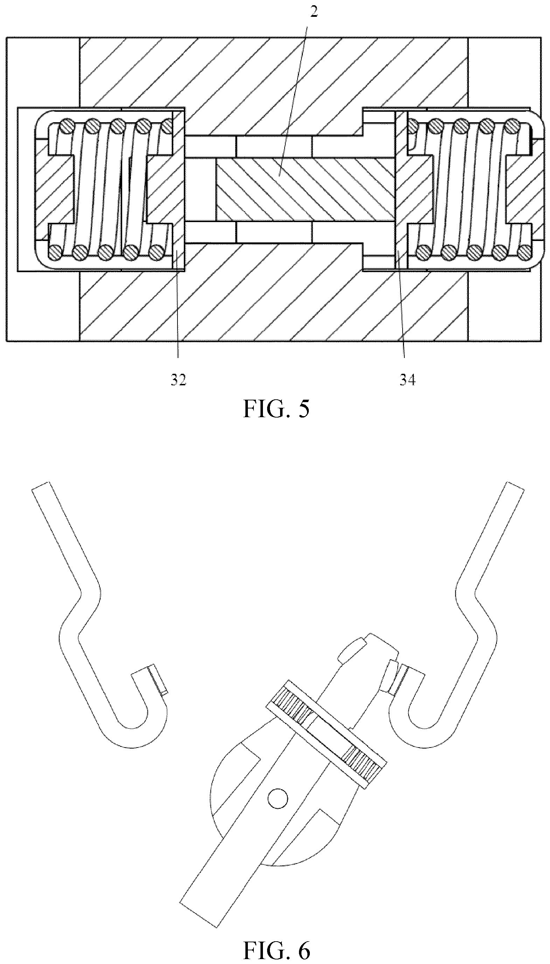

In this embodiment, the moving contact pressure maintaining mechanism is arranged at a middle position between the rotation center of the moving contact and the contact contact surface of the moving contact, and the first elastic piece and the second elastic piece are the same. When the dual-power transfer switch is switched from the double-off position to the first power-on position, the moving contact bracket rotates counterclockwise to make the moving contact contact with the first stationary contact, and then the moving contact bracket continues to rotate, causing the moving contact to rotate clockwise relative to the moving contact bracket (also relative to the frame). That is, the moving contact moves to the right direction as illustrated in FIG. 3, thus reaching the state as illustrated in FIG. 5. Assuming that the moving distance of the moving contact is L, the first baffle plate also moves to the left by L, the frame moves to the left by L/2, the first elastic piece is compressed by L/2, and the second baffle plate is blocked by the first boss and the second boss and cannot move. Because the frame moves by L/2, the second elastic piece is compressed by L/2. Finally, the dual-power transfer switch reaches the first power-on position, as illustrated in FIGS. 4 and 5. It can be seen that the moving amount of the moving contact is shared by the two elastic pieces, and the compression amount of each elastic piece is only half of the moving amount of the moving contact, which is equivalent to the rigidity of the elastic piece being reduced by half, so that the contact pressure changes more smoothly. It should be understood by those skilled in the art that when switching from the first power-on position to the double-off position, the moving contact moves to the right by a distance L, and the first elastic piece and the second elastic piece reset under the action of elastic force.

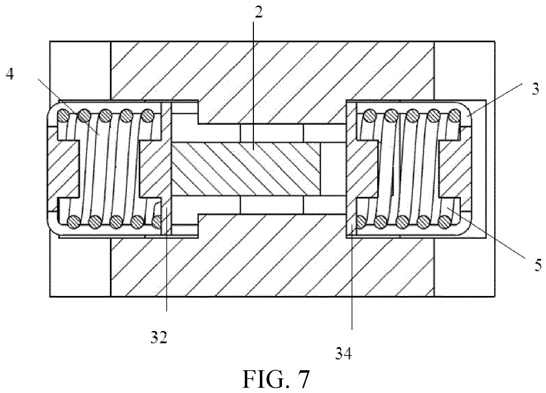

Similarly, when the dual-power transfer switch is switched from the double-off position to the second power-on position, the moving contact bracket rotates clockwise, so that the moving contact contacts the second stationary contact, and then the moving contact bracket continues to rotate, causing the moving contact to rotate counterclockwise relative to the moving contact bracket (also relative to the frame). That is, the moving contact moves to the left direction as illustrated in FIG. 3, thus reaching the state as illustrated in FIG. 7. Assuming that the moving distance of the moving contact is L, the second baffle plate also moves to the right by L, the frame moves to the right by L/2, the second elastic piece is compressed by L/2, and the first baffle plate is blocked by the first boss and the second boss and cannot move. Because the frame moves by L/2, the first elastic piece is compressed by L/2. Finally, the dual-power transfer switch reaches the second power-on position, as illustrated in FIGS. 6 and 7.

In the above embodiment, the first elastic piece and the second elastic piece are the same, but this is only for convenience of description, it should be understood that the first elastic piece and the second elastic piece can also be different, and in this case, the compression amount of the first elastic piece and the compression amount of the second elastic piece are different, but the sum of the compression amounts of the two are still equal to the moving amount of the moving contact.

In addition, in the above embodiment, the moving contact pressure maintaining mechanism is arranged at the middle position between the rotation center of the moving contact and the contact surface of the moving contact, so that the respective compression amounts of the first elastic piece and the second elastic piece are L/2. It should be understood by those skilled in the art that the moving contact pressure maintaining mechanism can be arranged at any position of the moving contact, and the moving contact can also be made into a curved shape, as long as the force can be transmitted to the contact surfaces of the moving contact and the stationary contact by a lever principle. Under such circumstances, it is only necessary to match the compression amounts of the elastic pieces with the moving amount of the moving contact according to the size of the moment arm, and it should be understood that the moving amount of the moving contact is still equal to the sum of the compression amounts of the first elastic piece and the second elastic piece.

The moving contact pressure maintaining mechanism according to the present invention has been described above. By arranging the moving contact pressure maintaining mechanism near the rotation center of the moving contact, the moment of inertia of the moving contact is effectively reduced, thus helping to improve the initial opening speed of the moving contact and improving the electrical operation performance of the dual-power transfer switch. In addition, through the series arrangement of the first elastic piece and the second elastic piece, the moving contact pressure maintaining mechanism is smaller in size, so that the application is more flexible, for example, it can be used in the case of small space, and the short-time withstand current of the product is improved.

While the best mode for carrying out the present invention has been described in detail, those skilled in the relate art of the present invention will recognize various alternative designs and embodiments for practicing the present invention within the scope of the appended claims.

## Claims

1. A moving contact pressure maintaining mechanism for a dual-power transfer switch, **characterized in that** the moving contact pressure maintaining mechanism comprises:
a frame (3), comprising a first elastic piece accommodating region and a second elastic piece accommodating region symmetrically arranged at two ends of the frame;
a first elastic piece (4), arranged in the first elastic piece accommodating region, wherein one end of the first elastic piece is connected to a first end wall of the frame, and the other end of the first elastic piece is connected to a first baffle plate (32);
a second elastic piece (5), arranged in the second elastic piece accommodating region, wherein one end of the second elastic piece is connected to a second end wall of the frame, and the other end of the second elastic piece is connected to a second baffle plate (34), and the first baffle plate and the second baffle plate are slidably arranged in the frame;
an opening for a moving contact (2) to pass through, so that the moving contact is positioned between the first baffle plate and the second baffle plate;
a stopper, mounted on a moving contact bracket and extending into the frame, wherein at a double-off position of the dual-power transfer switch, the moving contact abuts against the first baffle plate and the second baffle plate respectively, and the first baffle plate and the second baffle plate respectively abut against two ends of the stopper,
wherein if the dual-power transfer switch is switched from the double-off position to a first power-on position or a second power-on position, and after the moving contact moves along with a moving contact bracket such that the moving contact is contact with a first stationary contact of a first power supply or a second stationary contact of a second power supply, a moving amount of the moving contact relative to the moving contact bracket in the frame caused by a further movement of the moving contact bracket is equal to a sum of a compression amount of the first elastic piece and a compression amount of the second elastic piece.

2. The moving contact pressure maintaining mechanism according to claim 1, **characterized in that** the stopper comprises a first boss and a second boss which extend into the frame from an upper portion and a lower portion of the moving contact bracket toward the moving contact.

3. The moving contact pressure maintaining mechanism according to claim 2, **characterized in that** at the double-off position of the dual-power transfer switch, the first baffle plate (32) and the second baffle plate (34) respectively abut against step surfaces of the first boss and the second boss.

4. The moving contact pressure maintaining mechanism according to claim 1, **characterized in that** the moving contact pressure maintaining mechanism is arranged at a middle position between a rotation center of the moving contact (2) and a contact surface of the moving contact.

5. The moving contact pressure maintaining mechanism according to claim 4, **characterized in that** the first elastic piece and the second elastic piece are the same.

6. The moving contact pressure maintaining mechanism according to claim 5, **characterized in that** if the moving contact (2) swings in the frame, the compression amount of the first elastic piece (4) is half of a moving amount of the moving contact, and the compression amount of the second elastic piece (5) is half of the moving amount of the moving contact.

7. A dual-power transfer switch, comprising the moving contact pressure maintaining mechanism according to any one of claims 1-6.

## Patentansprüche

1. Mechanismus zur Aufrechterhaltung eines Drucks eines beweglichen Kontakts für einen Doppelleistungsübertragungsschalter, **dadurch gekennzeichnet, dass** der Mechanismus zur Aufrechterhaltung eines Drucks eines beweglichen Kontakts umfasst:
einen Rahmen (3), der einen Bereich zur Aufnahme eines ersten elastischen Teils und einen Bereich zur Aufnahme eines zweiten elastischen Teils aufweist, die symmetrisch an zwei Enden des Rahmens angeordnet sind;
ein erstes elastisches Teil (4), das in dem Bereich zur Aufnahme eines ersten elastischen Teils angeordnet ist, wobei ein Ende des ersten elastischen Teils mit einer ersten Endwand des Rahmens verbunden ist und das andere Ende des ersten elastischen Teils mit einer ersten Prallplatte (32) verbunden ist;
ein zweites elastisches Teil (5), das in dem Bereich zur Aufnahme eines zweiten elastischen Teils angeordnet ist, wobei ein Ende des zweiten elastischen Teils mit einer zweiten Endwand des Rahmens verbunden ist und das andere Ende des zweiten elastischen Teils mit einer zweiten Prallplatte (34) verbunden ist und die erste Prallplatte und die zweite Prallplatte verschiebbar in dem Rahmen angeordnet sind;
eine Öffnung für den Durchgang eines beweglichen Kontakts (2), so dass der bewegliche Kontakt zwischen der ersten Prallplatte und der zweiten Prallplatte positioniert ist;
einen Stopper, der an einer Halterung des beweglichen Kontakts angebracht ist und sich in den Rahmen hinein erstreckt, wobei der bewegliche Kontakt in einer Doppel-Aus-Stellung des Doppelleistungsübertragungsschalters an der ersten Prallplatte bzw. der zweiten Prallplatte anliegt und die erste Prallplatte bzw. die zweite Prallplatte an zwei Enden des Stoppers anliegen,
wobei, wenn der Doppelleistungsübertragungsschalter von der Doppel-Aus-Stellung in eine erste Einschaltstellung oder eine zweite Einschaltstellung geschaltet wird, und nachdem sich der bewegliche Kontakt zusammen mit einer Halterung des beweglichen Kontakts so bewegt hat, dass der bewegliche Kontakt mit einem ersten stationären Kontakt einer ersten Stromversorgung oder einem zweiten stationären Kontakt einer zweiten Stromversorgung in Kontakt ist, ein Bewegungsbetrag des beweglichen Kontakts relativ zu der Halterung des beweglichen Kontakts in dem Rahmen, der durch eine weitere Bewegung der Halterung des beweglichen Kontakts verursacht wird, gleich einer Summe eines Kompressionsbetrags des ersten elastischen Teils und eines Kompressionsbetrags des zweiten elastischen Teils ist.

2. Mechanismus zur Aufrechterhaltung eines Drucks eines beweglichen Kontakts nach Anspruch 1, **dadurch gekennzeichnet, dass** der Stopper einen ersten Vorsprung und einen zweiten Vorsprung umfasst, die sich von einem oberen Abschnitt und einem unteren Abschnitt der Halterung des beweglichen Kontakts in Richtung des beweglichen Kontakts in den Rahmen hinein erstrecken.

3. Mechanismus zur Aufrechterhaltung eines Drucks eines beweglichen Kontakts nach Anspruch 2, **dadurch gekennzeichnet, dass** in der Doppel-Aus-Stellung des Doppelleistungsübertragungsschalters die erste Prallplatte (32) und die zweite Prallplatte (34) an Stufenflächen des ersten Vorsprungs bzw. des zweiten Vorsprungs anliegen.

4. Mechanismus zur Aufrechterhaltung eines Drucks eines beweglichen Kontakts nach Anspruch 1, **dadurch gekennzeichnet, dass** der Mechanismus zur Aufrechterhaltung eines Drucks eines beweglichen Kontakts in einer mittleren Stellung zwischen einem Drehzentrum des beweglichen Kontakts (2) und einer Kontaktfläche des beweglichen Kontakts angeordnet ist.

5. Mechanismus zur Aufrechterhaltung eines Drucks eines beweglichen Kontakts nach Anspruch 4, **dadurch gekennzeichnet, dass** das erste elastische Teil und das zweite elastische Teil gleich sind.

6. Mechanismus zur Aufrechterhaltung eines Drucks eines beweglichen Kontakts nach Anspruch 5, **dadurch gekennzeichnet, dass**, wenn der bewegliche Kontakt (2) im Rahmen schwingt, der Kompressionsbetrag des ersten elastischen Teils (4) die Hälfte eines Bewegungsbetrags des beweglichen Kontakts ist, und der Kompressionsbetrag des zweiten elastischen Teils (5) die Hälfte des Bewegungsbetrags des beweglichen Kontakts ist.

7. Doppelleistungsübertragungsschalter, der den Mechanismus zur Aufrechterhaltung eines Drucks eines beweglichen Kontakts nach einem der Ansprüche 1 bis 6 umfasst.

## Revendications

1. Mécanisme de maintien de pression de contact mobile pour un commutateur de transfert à double puissance, **caractérisé en ce que** le mécanisme de maintien de pression de contact mobile comprend :
un cadre (3), comprenant une première région de logement de pièce élastique et une seconde région de logement de pièce élastique agencées symétriquement aux deux extrémités du cadre ;
une première pièce élastique (4) agencée dans la première région de logement de pièce élastique, une extrémité de la première pièce élastique étant connectée à une première paroi d'extrémité du cadre, et l'autre extrémité de la première pièce élastique étant connectée à une première plaque de baffle (32) ;
une seconde pièce élastique (5) agencée dans la seconde région de logement de pièce élastique, une extrémité de la seconde pièce élastique étant connectée à une seconde paroi d'extrémité du cadre, et l'autre extrémité de la seconde pièce élastique étant connectée à une seconde plaque de baffle (34), et la première plaque de baffle et la seconde plaque de baffle étant agencées de manière coulissante dans le cadre ;
une ouverture destinée à faire passer un contact mobile (2) de telle sorte que le contact mobile est positionné entre la première plaque de baffle et la seconde plaque de baffle ;
un moyen d'arrêt, monté sur un support de contact mobile et s'étendant jusque dans le cadre, dans lequel, au niveau d'une position d'arrêt double du commutateur de transfert à double puissance, le contact mobile vient buter contre la première plaque de baffle et la seconde plaque de baffle respectivement, et la première plaque de baffle et la seconde plaque de baffle viennent respectivement buter contre deux extrémités du moyen d'arrêt,
dans lequel, si le commutateur de transfert à double puissance est commuté depuis la position d'arrêt double vers une première position de mise en marche ou une seconde position de mise en marche, et après que le contact mobile se déplace en même temps qu'un support de contact mobile de telle sorte que le contact mobile est en contact avec un premier contact stationnaire d'une première alimentation de puissance ou un second contact stationnaire d'une seconde alimentation de puissance, une amplitude de déplacement du contact mobile relativement au support de contact mobile dans le cadre due à une poursuite de déplacement du support de contact mobile est égale à une somme d'une quantité de compression de la première pièce élastique et d'une quantité de compression de la seconde pièce élastique.

2. Mécanisme de maintien de pression de contact mobile selon la revendication 1, **caractérisé en ce que** le moyen d'arrêt comprend un premier bossage et un second bossage qui s'étendent jusque dans le cadre depuis une portion supérieure et une portion inférieure du support de contact mobile jusqu'au contact mobile.

3. Mécanisme de maintien de pression de contact mobile selon la revendication 2, **caractérisé en ce que**, au niveau de la position d'arrêt double du commutateur de transfert à double puissance, la première plaque de baffle (32) et la seconde plaque de baffle (34) viennent respectivement buter contre des surfaces en gradins du premier bossage et du second bossage.

4. Mécanisme de maintien de pression de contact mobile selon la revendication 1, **caractérisé en ce que** le mécanisme de maintien de pression de contact mobile est agencé à une position médiane entre un centre de rotation du contact mobile (2) et une surface de contact du contact mobile.

5. Mécanisme de maintien de pression de contact mobile selon la revendication 4, **caractérisé en ce que** la première pièce élastique et la seconde pièce élastique sont les mêmes.

6. Mécanisme de maintien de pression de contact mobile selon la revendication 5, **caractérisé en ce que**, si le contact mobile (2) pivote dans le cadre, la quantité de compression de la première pièce élastique (4) est la moitié d'une amplitude de déplacement du contact mobile, et la quantité de compression de la seconde pièce élastique (5) est la moitié de l'amplitude déplacement du contact mobile.

7. Commutateur de transfert à double puissance, comprenant le mécanisme de maintien de pression de contact mobile selon l'une quelconque des revendications 1 à 6.
